(19) Europäisches Patentamt
European Patent Office
Office européen des brevets

(11) EP 3 069 572 B1

(12) EUROPÄISCHE PATENTSCHRIFT

(45) Veröffentlichungstag und Bekanntmachung des Hinweises auf die Patenterteilung:
**11.10.2017 Patentblatt 2017/41**

(21) Anmeldenummer: **14799140.0**

(22) Anmeldetag: **13.11.2014**

(51) Int Cl.:
***H05B 33/08*** (2006.01)

(86) Internationale Anmeldenummer:
**PCT/EP2014/074479**

(87) Internationale Veröffentlichungsnummer:
**WO 2015/071357 (21.05.2015 Gazette 2015/20)**

(54) **BETRIEBSSCHALTUNG FÜR EIN LEUCHTMITTEL UND VERFAHREN ZUM BETREIBEN EINES LEUCHTMITTELS**

OPERATING CIRCUIT FOR A LAMP AND METHOD FOR OPERATING A LAMP

CIRCUIT DE COMMANDE D'UN MOYEN D'ÉCLAIRAGE ET PROCÉDÉ PERMETTANT DE FAIRE FONCTIONNER UN MOYEN D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.11.2013 DE 102013223220**

(43) Veröffentlichungstag der Anmeldung:
**21.09.2016 Patentblatt 2016/38**

(73) Patentinhaber: **Tridonic GmbH & Co. KG 6851 Dornbirn (AT)**

(72) Erfinder:
• **NETZER, Harald A-6710 Nenzing (AT)**
• **KUCERA, Clemens A-6700 Bludenz (AT)**

(74) Vertreter: **Banzer, Hans-Jörg Kraus & Weisert Patentanwälte PartGmbB Thomas-Wimmer-Ring 15 80539 München (DE)**

(56) Entgegenhaltungen:
DE-A1-102006 034 371    US-A1- 2006 145 670

**EP 3 069 572 B1**

**Beschreibung**

Die Erfindung betrifft Betriebsschaltungen für Leuchtmittel und Verfahren zum Betreiben eines Leuchtmittels. Die Erfindung betrifft insbesondere Betriebsschaltungen mit einem getakteten Wandler.

Mit zunehmender Verbreitung von Leuchtmitteln, die wenigstens eine Leuchtdiode (LED) aufweisen, gewinnen Betriebsschaltungen für derartige Leuchtmittel weiter an Bedeutung. Die Betriebsschaltung dient hauptsächlich dazu, eine gewünschte Energieversorgung für das Leuchtmittel bereitzustellen. Die Betriebsschaltung kann so ausgestaltet sein, dass sie für unterschiedliche Leuchtmittel verwendbar ist und/oder eine Dimmbarkeit des Leuchtmittels ermöglicht. Die Lichtabstrahlung von LEDs hängt von einem Stromfluss durch die LEDs ab. Zur Helligkeitssteuerung oder Helligkeitsregelung werden LEDs daher typischerweise in einem Modus betrieben, in dem der Stromfluss durch die LED durch die Betriebsschaltung gesteuert oder geregelt wird.

Zur Ansteuerung einer Anordnung von einer LED oder mehreren LEDs können Schaltregler, insbesondere Tiefsetzsteller verwendet werden, die in der Technik auch als Abwärtswandler, Buck-Konverter oder "Step-Down"-Konverter bezeichnet werden. In einer derartigen Betriebsschaltung steuert eine Steuereinrichtung ein hochfrequent getaktetes steuerbares Schaltmittel an. Bei dem steuerbaren Schaltmittel kann es sich um einen Leistungstransistor handeln. Im eingeschalteten Zustand des Schaltmittels kann Strom über die LED-Anordnung und eine Spule fließen, die dadurch mit Energie aufgeladen wird. Die zwischengespeicherte Energie der Spule kann sich im ausgeschalteten Zustand des Schaltmittels über die LEDs entladen. Andere Wandlertopologien können eingesetzt werden, beispielsweise Sperrwandler oder Aufwärtswandler.

Herkömmlich werden bei einem Betriebsstart der Betriebsschaltung Steuersignale für das steuerbare Schaltmittel eines Schaltreglers in einer Regelschleife erzeugt, deren Parameter von dem eingestellten Dimmlevel abhängen können. Dies kann dazu führen, dass die Zeit, die bis zum Beginn einer Lichtabgabe durch das Leuchtmittel verstreicht, sich verlängert, wenn der Dimmlevel auf einen kleinen Wert abgesenkt ist und/oder wenn die Betriebsschaltung für ein Leuchtmittel verwendet wird, dessen Anordnung von Leuchtdioden eine große Vorwärtsspannung aufweist.

Die US 2006/0145670 A1 beschreibt eine Wandlerschaltung für eine LED-Anordnung, bei welcher eine Stromregelung in einer Startbetriebsart und einer Normalbetriebsart auf unterschiedlichen Zielströmen beruht.

Es besteht ein Bedarf an Vorrichtungen und Verfahren, die Verbesserungen im Hinblick auf die genannten Nachteile bieten. Es besteht insbesondere ein Bedarf an Betriebsschaltungen und Verfahren, mit denen die Zeit, die bis zum Beginn einer Lichtabgabe durch das Leuchtmittel verstreicht, selbst dann gering gehalten werden kann, wenn der Dimmlevel auf einen kleinen Wert abgesenkt ist und/oder die Betriebsschaltung für ein Leuchtmittel verwendet wird, dessen Anordnung von Leuchtdioden eine große Vorwärtsspannung aufweist.

Nach Ausführungsbeispielen der Erfindung wird nach einem Betriebsstart in einer ersten Betriebsphase zunächst eine gewünschte Ausgangsspannung einer Betriebsschaltung aufgebaut, die einen getakteten Wandler aufweist. Nach dem Aufbau der gewünschten Ausgangsspannung kann wenigstens ein Parameter einer Stromregelung, beispielsweise ein Sollwert eines Ausgangsstroms, verändert werden, um in einer zweiten Betriebsphase wenigstens eine Leuchtdiode (LED) mit einem LED-Strom zu versorgen.

Durch die Veränderung der Stromregelung zwischen der ersten Betriebsphase und der zweiten Betriebsphase kann in der ersten Betriebsphase ein rascher Aufbau einer Ausgangsspannung selbst dann erfolgen, wenn ein niedriger Dimmlevel eingestellt ist. Für die zweite Betriebsphase, die dem Nutzbetrieb mit einer Lichtabgabe durch die LED(s) entspricht, kann die Stromregelung so erfolgen, dass der LED-Strom auf einen für die Lichtabgabe gewünschten Wert geregelt wird. Die Veränderung der Stromregelung zwischen der ersten Betriebsphase und der zweiten Betriebsphase, die beispielsweise durch Veränderung eines Sollwerts einer Regelgröße erfolgen kann, stellt sicher, dass der LED-Strom dann auf einen gewünschten Wert eingestellt ist, wenn eine Lichtabgabe durch die LED(s) beginnt. Wenigstens die erste Betriebsphase kann abhängig von der Vorwärtsspannung der wenigstens einen Leuchtdiode des Leuchtmittels ausgeführt werden.

Nach einem Ausführungsbeispiel umfasst eine Betriebsschaltung für ein Leuchtmittel, das wenigstens eine Leuchtdiode aufweist, einen getakteten Wandler mit einem steuerbaren Schaltmittel. Die Betriebsschaltung umfasst eine Steuereinrichtung zum getakteten Schalten des steuerbaren Schaltmittels. Die Steuereinrichtung ist eingerichtet, um in einer ersten Betriebsphase eine Stromregelung abweichend von einer auf die erste Betriebsphase folgenden zweiten Betriebsphase auszuführen.

Die Steuereinrichtung kann eingerichtet sein, um in der ersten Betriebsphase einen Parameter einer Regelschleife für die Stromregelung auf einen ersten Wert zu setzen und um in der zweiten Betriebsphase den Parameter auf einen zweiten Wert zu setzen, der von dem ersten Wert verschieden ist.

Der Parameter der Regelschleife, der zwischen der ersten Betriebsphase und der zweiten Betriebsphase verändert wird, kann einen Sollwert eines Stroms, der mit der Regelschleife geregelt wird, beeinflussen. Der Parameter der Regelschleife, der zwischen der ersten Betriebsphase und der zweiten Betriebsphase verändert wird, kann ein Sollwert eines Ausgangsstroms des Wandlers oder eines Spulenstroms einer Spule des Wandlers sein.

Die Steuereinrichtung kann eingerichtet sein, um die erste Betriebsphase abhängig von einer Vorwärtsspan-

2

nung der wenigstens einen Leuchtdiode auszuführen.

Die Steuereinrichtung kann eingerichtet sein, um die Vorwärtsspannung der wenigstens einen Leuchtdiode aus einem nicht-flüchtigen Speicher auszulesen.

Die Steuereinrichtung kann eingerichtet sein, um bei einem ersten Betriebsstart der Betriebsschaltung, bei dem das Leuchtmittel mit der Betriebsschaltung verbunden ist, die Vorwärtsspannung der wenigstens einen Leuchtdiode automatisch zu detektieren und in dem nicht-flüchtigen Speicher zu speichern. Bei nachfolgenden weiteren Betriebsstarts kann die gespeicherte Vorwärtsspannung verwendet werden, um sequentiell die erste Betriebsphase und die zweite Betriebsphase auszuführen. Bei dem ersten Betriebsstart kann auf die erste Betriebsphase verzichtet werden, d.h. es kann für diesen einen Betriebsstart eine längere Zeit bis zum Beginn der Lichtabgabe akzeptiert werden.

Eine Dauer der ersten Betriebsphase kann von der Vorwärtsspannung der wenigstens einen Leuchtdiode abhängen.

Die Steuereinrichtung kann eingerichtet sein, um einen Parameter einer Regelschleife zu verändern und die zweite Betriebsphase zu beginnen, bevor eine Ausgangsspannung der Betriebsschaltung die Vorwärtsspannung erreicht.

Die Betriebsschaltung kann einen Ausgangskondensator umfassen. Die Steuereinrichtung kann eingerichtet sein, um die zweite Betriebsphase zu beginnen, bevor eine Spannung an dem Ausgangskondensator die Vorwärtsspannung der wenigstens einen Leuchtdiode erreicht.

Der Wandler umfasst eine Spule. Die Steuereinrichtung ist eingerichtet, um abhängig von einem Spulenstrom einen Schaltzeitpunkt für das steuerbare Schaltmittel zu bestimmen.

Die Steuereinrichtung kann eingerichtet sein, um wenigstens einen Schaltschwellenwert des Spulenstroms, bei dem das steuerbare Schaltmittel geschaltet wird, für die erste Betriebsphase und die zweite Betriebsphase unterschiedlich einzustellen, um zwischen der ersten Betriebsphase und der zweiten Betriebsphase die Stromregelung zu verändern.

Die Steuereinrichtung ist eingerichtet, um das steuerbare Schaltmittel so zu schalten, dass ein zeitlicher Mittelwert des Spulenstroms in der ersten Betriebsphase größer als in der zweiten Betriebsphase ist.

Die Steuereinrichtung kann eingerichtet sein, um die Stromregelung in der ersten Betriebsphase unabhängig von einem Dimmlevel auszuführen. Die Steuereinrichtung kann eingerichtet sein, um die Stromregelung in der zweiten Betriebsphase abhängig von dem Dimmlevel auszuführen. Der Wert des Parameters der Regelschleife, der zwischen der ersten Betriebsphase und der zweiten Betriebsphase verändert wird, kann in der ersten Betriebsphase von dem Dimmlevel unabhängig sein und kann in der zweiten Betriebsphase von dem Dimmlevel abhängig sein.

Der Wandler kann ein Tiefsetzsteller sein.

Nach einem weiteren Ausführungsbeispiel wird ein LED-Konverter angegeben, der die Betriebsschaltung nach einem Ausführungsbeispiel umfasst.

Ein System nach einem Ausführungsbeispiel umfasst ein Leuchtmittel, das wenigstens eine Leuchtdiode aufweist. Das System umfasst eine Betriebsschaltung nach einem Ausführungsbeispiel, die mit dem Leuchtmittel verbunden ist.

Nach einem weiteren Ausführungsbeispiel wird ein Verfahren zum Betreiben eines Leuchtmittels, das wenigstens eine Leuchtdiode umfasst, mit einer Betriebsschaltung, die einen getakteten Wandler mit einem steuerbaren Schaltmittel umfasst, angegeben. Das Verfahren umfasst ein getaktetes Schalten des steuerbaren Schaltmittels in einer ersten Betriebsphase zum Aufbauen einer Ausgangsspannung der Betriebsschaltung. Das Verfahren umfasst ein getaktetes Schalten des steuerbaren Schaltmittels in einer auf die erste Betriebsphase nachfolgenden zweiten Betriebsphase, um die wenigstens eine Leuchtdiode mit einem LED-Strom zu versorgen. In der ersten Betriebsphase wird eine Stromregelung abweichend von der zweiten Betriebsphase ausgeführt.

Weitere Merkmale von Verfahren nach Ausführungsbeispielen und die damit jeweils erreichten Wirkungen entsprechen den weiteren Merkmalen der Betriebsschaltung nach Ausführungsbeispielen.

Das Verfahren kann von einer Betriebsschaltung oder einem System nach einem Ausführungsbeispiel automatisch ausgeführt werden.

Bei dem Verfahren kann in der ersten Betriebsphase ein Parameter einer Regelschleife für die Stromregelung auf einen ersten Wert gesetzt werden, und der Parameter kann in der zweiten Betriebsphase auf einen zweiten Wert gesetzt werden, der von dem ersten Wert verschieden ist.

Der Parameter der Regelschleife, der zwischen der ersten Betriebsphase und der zweiten Betriebsphase verändert wird, kann einen Sollwert eines Stroms, der mit der Regelschleife geregelt wird, beeinflussen. Der Parameter der Regelschleife, der zwischen der ersten Betriebsphase und der zweiten Betriebsphase verändert wird, kann ein Sollwert eines Ausgangsstroms des Wandlers oder ein Sollwert eines Spulenstroms einer Spule des Wandlers sein.

Die erste Betriebsphase kann abhängig von einer Vorwärtsspannung der wenigstens einen Leuchtdiode ausgeführt werden.

Die Vorwärtsspannung der wenigstens einen Leuchtdiode kann aus einem nicht-flüchtigen Speicher ausgelesen werden.

Bei dem Verfahren kann bei einem ersten Betriebsstart der Betriebsschaltung, bei dem das Leuchtmittel mit der Betriebsschaltung verbunden ist, die Vorwärtsspannung der wenigstens einen Leuchtdiode automatisch detektiert und in dem nicht-flüchtigen Speicher gespeichert werden. Bei nachfolgenden weiteren Betriebsstarts kann die gespeicherte Vorwärtsspannung verwendet werden, um sequentiell die erste Betriebsphase und die zweite Betriebsphase auszuführen. Bei dem ersten Betriebsstart kann auf die erste Betriebsphase verzichtet werden, d.h. es kann für diesen einen Betriebsstart eine längere Zeit bis zum Beginn der Lichtabgabe akzeptiert werden.

Eine Dauer der ersten Betriebsphase kann von der Vorwärtsspannung der wenigstens einen Leuchtdiode abhängen.

Ein Parameter einer Regelschleife zur Stromregelung kann verändert werden, um die zweite Betriebsphase zu beginnen, bevor eine Ausgangsspannung der Betriebsschaltung die Vorwärtsspannung erreicht.

Die Betriebsschaltung kann einen Ausgangskondensator umfassen. Die zweite Betriebsphase kann begonnen werden, bevor eine Spannung an dem Ausgangskondensator die Vorwärtsspannung der wenigstens einen Leuchtdiode erreicht.

Der Wandler umfasst eine Spule. Abhängig von einem Spulenstrom der Spule wird ein Schaltzeitpunkt für das steuerbare Schaltmittel bestimmt.

Wenigstens ein Schaltschwellenwert des Spulenstroms, bei dem das steuerbare Schaltmittel geschaltet wird, kann für die erste Betriebsphase und die zweite Betriebsphase unterschiedlich eingestellt werden, um zwischen der ersten Betriebsphase und der zweiten Betriebsphase die Stromregelung zu verändern.

Das steuerbare Schaltmittel wird so geschaltet, dass ein zeitlicher Mittelwert des Spulenstroms in der ersten Betriebsphase größer als in der zweiten Betriebsphase ist.

Die Stromregelung kann in der ersten Betriebsphase unabhängig von einem Dimmlevel ausgeführt werden. Die Stromregelung kann in der zweiten Betriebsphase abhängig von dem Dimmlevel ausgeführt werden. Der Wert des Parameters der Regelschleife, der zwischen der ersten Betriebsphase und der zweiten Betriebsphase verändert wird, kann in der ersten Betriebsphase von dem Dimmlevel unabhängig sein und kann in der zweiten Betriebsphase von dem Dimmlevel abhängig sein.

Der Wandler kann ein Tiefsetzsteller sein.

Nach Ausführungsbeispielen der Erfindung kann in einer ersten Betriebsphase ein Ausgangsstrom des Wandlers auf einen höheren Wert geregelt werden, um einen raschen Aufbau einer Ausgangsspannung zu erlauben. Für den anschließenden Nutzbetrieb kann die Stromregelung so angepasst werden, dass der Ausgangsstrom entsprechend dem jeweils eingestellten Dimmlevel eingestellt wird.

Die Erfindung wird nachfolgend unter Bezugnahme auf die beigefügte Zeichnung anhand bevorzugter Ausführungsbeispiele näher erläutert.

Figur 1 zeigt ein System mit einer Betriebsschaltung nach einem Ausführungsbeispiel.

Figur 2 ist ein Flussdiagramm eines Verfahrens nach einem Ausführungsbeispiel.

Figur 3 zeigt ein System mit einer Betriebsschaltung nach einem weiteren Ausführungsbeispiel.

Figur 4 zeigt einen Spulenstrom eines Tiefsetzstellers einer Betriebsschaltung nach einem Ausführungsbeispiel.

Figur 5 zeigt ein System mit einer Betriebsschaltung nach einem weiteren Ausführungsbeispiel.

Figur 6 zeigt ein System mit einer Betriebsschaltung nach einem weiteren Ausführungsbeispiel.

Figur 7 ist ein Flussdiagramm eines Verfahrens nach einem Ausführungsbeispiel.

Figur 8 ist ein Flussdiagramm eines Verfahrens nach einem weiteren Ausführungsbeispiel.

Figur 9 zeigt ein System mit einer Betriebsschaltung nach einem weiteren Ausführungsbeispiel.

Figur 10 zeigt einen LED-Konverter mit einer Betriebsschaltung nach einem Ausführungsbeispiel.

Die Erfindung wird nachfolgend anhand von Ausführungsbeispielen unter Bezugnahme auf die Figuren näher beschrieben, in denen identische Bezugszeichen identische oder korrespondierende Elemente repräsentieren. Die Merkmale verschiedener Ausführungsbeispiele können miteinander kombiniert werden, sofern dies in der Beschreibung nicht ausdrücklich ausgeschlossen wird. Auch wenn einige Ausführungsbeispiele im Kontext spezifischer Anwendungen, beispielsweise im Kontext von Betriebsgeräten für LED-Module oder andere Leuchtmittel mit wenigstens einer Leuchtdiode, näher beschrieben werden, sind die Ausführungsbeispiele nicht auf diese Anwendungen beschränkt.

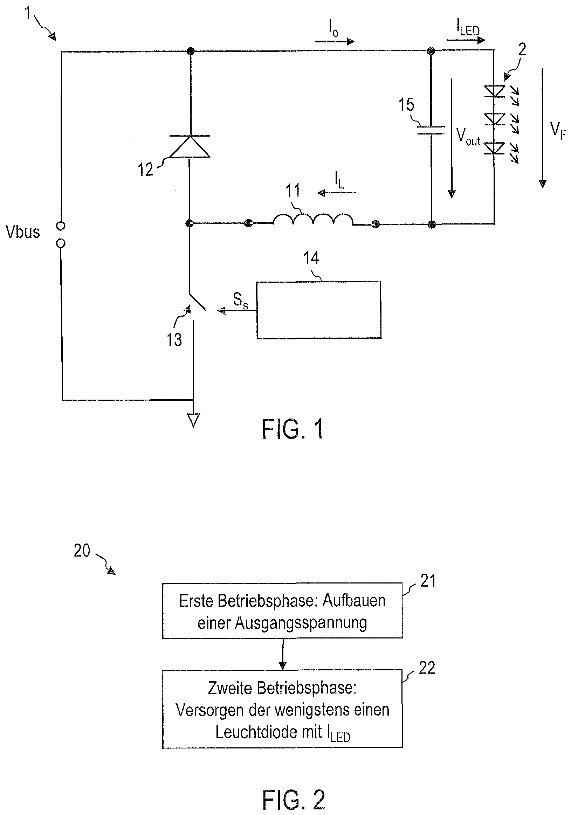

Figur 1 zeigt ein System, das eine Betriebsschaltung 1 für ein Leuchtmittel nach einem Ausführungsbeispiel umfasst. Das Leuchtmittel kann eine Leuchtdiode (LED) oder mehrere LEDs 2 umfassen. Die LEDs 2 können anorganische oder organische LEDs 2 sein. Die mehreren LEDs 2 können in Serie oder parallel geschaltet sein. Die mehreren LEDs 2 können auch in komplexeren Anordnungen verschaltet sein, beispielsweise in mehreren zueinander parallel geschalteten Reihenschaltungen. Während beispielhaft drei LEDs 2 dargestellt sind, kann das Leuchtmittel auch nur eine LED, zwei LEDs oder mehr als drei LEDs aufweisen. Die Betriebsschaltung 1 kann zur Verwendung mit Leuchtmitteln mit unterschiedlicher Anzahl und/oder unterschiedlicher Verschaltung von LEDs ausgestaltet sein. Die Anzahl und/oder Verschaltung der LED(s) 2 bestimmt eine Vorwärtsspannung $V_F$ der wenigstens einen Leuchtdiode des Leuchtmittels, die von der Betriebsschaltung 1 mit einem LED-Strom versorgt wird.

Die Betriebsschaltung 1 dient zum Betrieb der wenigstens einen LED 2. Der Betriebsschaltung 1 wird eine Versorgungsspannung Vbus zugeführt, die eine Gleichspannung oder eine gleichgerichtete Wechselspannung sein kann. Der Ausgang der Betriebsschaltung 1, der mit der wenigstens einen LED verbunden ist, ist mit einer Spule 11 und einem steuerbaren Schaltmittel 13 verbunden. Wenn die wenigstens eine LED 2 mit der Betriebsschaltung 1 verbunden ist, sind das steuerbare Schaltmittel 13, die Spule 11 und die wenigstens eine LED 2 in Reihe geschaltet. Eine Diode 12 ist parallel zu der wenigstens einen LED 2 und der Spule 11 geschaltet. Ein Kondensator 15 kann optional zwischen die Ausgangsanschlüsse geschaltet sein, so dass der Kondensator 15 parallel zu der wenigstens einen LED 2 geschaltet ist.

Im eingeschalteten Zustand des steuerbaren Schaltmittels 13 fließt Strom durch die LED(s) 2 und durch die Spule 11, die dadurch magnetisiert wird. Im ausgeschalteten Zustand des steuerbaren Schaltmittels 13 entlädt sich die im Magnetfeld der Spule gespeicherte Energie in Form eines Stroms über die Diode 12 und die LED(s) 2. Parallel dazu kann am Beginn des Einschaltens des steuerbaren Schaltmittels 13 der Kondensator 15 geladen werden. Während der Ausschaltphase des steuerbaren Schaltmittels 13 (Freilaufphase) kann sich der Kondensator 15 entladen und trägt zum Stromfluss durch die LED(s) 2 bei. Der Kondensator 15 kann so dimensioniert sein, dass dies zu einer Glättung des Stroms durch die LED(s) 2 führt.

Das steuerbare Schaltmittel 13 kann ein Leistungsschalter sein. Das steuerbare Schaltmittel 13 kann ein Feldeffekttransistor oder ein Bipolartransistor sein. Das steuerbare Schaltmittel 13 kann ein Transistor mit isolierter Gateelektrode sein.

Die Betriebsschaltung 1 weist eine Steuereinrichtung 14 zum getakteten Schalten des steuerbaren Schaltmittels 13 auf. Die Steuereinrichtung 14 kann eine integrierte Halbleiterschaltung sein. Die Steuereinrichtung 14 kann eine anwendungsspezifische Spezialschaltung (ASIC, "Application Specific Integrated Circuit"), ein Controller, ein Mikrocontroller, ein Prozessor, ein Mikroprozessor oder eine andere integrierte Halbleiterschaltung sein oder wenigstens eine derartige integrierte Halbleiterschaltung umfassen.

Die Steuereinrichtung 14 kann im Betrieb ein Steuersignal $S_s$ zum Steuern des steuerbaren Schaltmittels 13 erzeugen. Wie unter Bezugnahme auf Figur 2 bis Figur 10 detailliert beschrieben wird, kann die Betriebsschaltung 1 so eingerichtet sein, dass die Steuereinrichtung 14 das steuerbare Schaltmittel 13 für eine Regelung eines Stroms, beispielsweise zur Regelung eines Ausgangsstroms $I_o$ des Wandlers, getaktet schaltet. Die Steuereinrichtung 14 kann in einer ersten Betriebsphase nach dem Betriebsstart die Stromregelung anders als in einer nachfolgenden zweiten Betriebsphase ausführen. Beispielsweise kann in der ersten Betriebsphase das steuerbare Schaltmittel 13 so getaktet geschaltet werden, dass der Ausgangsstroms $I_o$ des Wandlers einen größeren zeitlichen Mittelwert aufweist als in der nachfolgenden zweiten Betriebsphase. In der ersten Betriebsphase kann der Ausgangsstrom $I_o$ den Kondensator 15 laden, bis eine Ausgangsspannung $V_{out}$ der Betriebsschaltung 1 gleich der Vorwärtsspannung $V_F$ der wenigstens einen LED 2 des Leuchtmittels oder näherungsweise gleich der Vorwärtsspannung $V_F$ der wenigstens einen LED 2 des Leuchtmittels ist. In der ersten Betriebsphase kann der zeitliche Mittelwert des Ausgangsstroms $I_o$ auf einen Wert geregelt werden, der unabhängig von einem eingestellten Dimmlevel ist. In der zweiten Betriebsphase kann ein zeitlicher Mittelwert des Ausgangsstrom $I_o$ gleich dem zeitlichen Mittelwert des LED-Stroms $I_{LED}$ sein, der der wenigstens einen LED 2 zugeführt wird. In der zweiten Betriebsphase kann die Stromregelung so erfolgen, dass der zeitliche Mittelwert des LED-Strom $I_{LED}$ von einem eingestellten Dimmlevel abhängt.

Figur 2 ist ein Flussdiagramm eines Verfahrens 20, das von der Betriebsschaltung 1 ausgeführt werden kann.

Bei Schritt 21 wird in einer ersten Betriebsphase das steuerbare Schaltmittel 13 so angesteuert, dass eine Ausgangsspannung aufgebaut wird, die sich der Vorwärtsspannung $V_F$ der wenigstens einen Leuchtdiode 2 nähert oder die die Vorwärtsspannung $V_F$ der wenigstens einen Leuchtdiode 2 erreicht. In Schritt 21 kann die Steuereinrichtung 14 das steuerbare Schaltmittel 13 ansteuern, um in einer Regelschleife zur Stromregelung den Ausgangsstrom $I_o$ des Wandlers im zeitlichen Mittel auf einen ersten Wert einzustellen, der vom Dimmlevel unabhängig sein kann.

Bei Schritt 22 wird in einer zweiten Betriebsphase das steuerbare Schaltmittel 13 angesteuert, wobei wenigstens ein Parameter einer Regelschleife, in der Steuersignale zum Steuern des steuerbaren Schaltmittels 13 erzeugt werden, auf einen anderen Wert als in der ersten Betriebsphase bei Schritt 21 gesetzt ist. In der zweiten Betriebsphase kann die Steuereinrichtung 14 das steuerbare Schaltmittel 13 so ansteuern, dass ein zeitlicher Mittelwert des Ausgangsstroms

$I_o$ gleich dem Sollwert für den LED-Strom $I_{LED}$ ist. In der zweiten Betriebsphase kann die Steuereinrichtung 14 das steuerbare Schaltmittel 13 so ansteuern, dass ein zeitlicher Mittelwert des Ausgangsstroms $I_o$ von einem eingestellten Dimmlevel abhängt. In der zweiten Betriebsphase kann die Steuereinrichtung 14 das steuerbare Schaltmittel 13 so ansteuern, dass ein zeitlicher Mittelwert des Ausgangsstroms $I_o$ wenigstens für einen Dimmlevel, beispielsweise für einen Dimmlevel von 1 %, oder für mehrere Dimmlevel kleiner als der zeitliche Mittelwert des Ausgangsstroms $I_o$ des Wandlers in ersten Betriebsphase ist.

Der Übergang von der ersten Betriebsphase bei Schritt 21 zu der zweiten Betriebsphase 22 kann zu einem Zeitpunkt erfolgen, der von der Vorwärtsspannung $V_F$ der wenigstens einen LED 2 abhängt. Die Steuereinrichtung 14 kann abhängig von der Vorwärtsspannung $V_F$ der LED(s) 2 des Leuchtmittels einen Zeitpunkt bestimmen, zu dem die Stromregelung verändert wird, um die zweite Betriebsphase zu beginnen. Alternativ kann die Steuereinrichtung 14 die Spannung an dem Kondensator 15 überwachen und mit einem Spannungsschwellenwert vergleichen, der von der Vorwärtsspannung $V_F$ der LED(s) 2 des Leuchtmittels abhängt.

Die Betriebsschaltung kann eingerichtet sein, um die Vorwärtsspannung $V_F$ der LED(s) 2 des Leuchtmittels automatisch zu erkennen. Bei dem ersten Betriebsstart der Betriebsschaltung 1 mit dem damit verbundenen Leuchtmittel kann die Betriebsschaltung 1 automatisch die Vorwärtsspannung $V_F$ der LED(s) 2 des Leuchtmittels erkennen und die entsprechende Information in einem Speicher, insbesondere einem nicht-flüchtigen Speicher, hinterlegen. Bei dem ersten Betriebsstart, den die Betriebsschaltung 1 mit dem damit verbundenen Leuchtmittel ausführt, kann die erste Betriebsphase bei Schritt 21 entfallen. Bei wenigstens einem und typischerweise mehreren nachfolgenden Betriebsstarts der Betriebsschaltung 1 mit dem damit verbundenen Leuchtmittel kann die Steuereinrichtung 14 die beim ersten Betriebsstart ermittelte Information über die Vorwärtsspannung $V_F$ der LED(s) 2 des Leuchtmittels verwenden, um zu bestimmen, wann ein Übergang von einer Stromregelung in der ersten Betriebsphase zu davon verschiedenen Stromregelung in der zweiten Betriebsphase erfolgen soll.

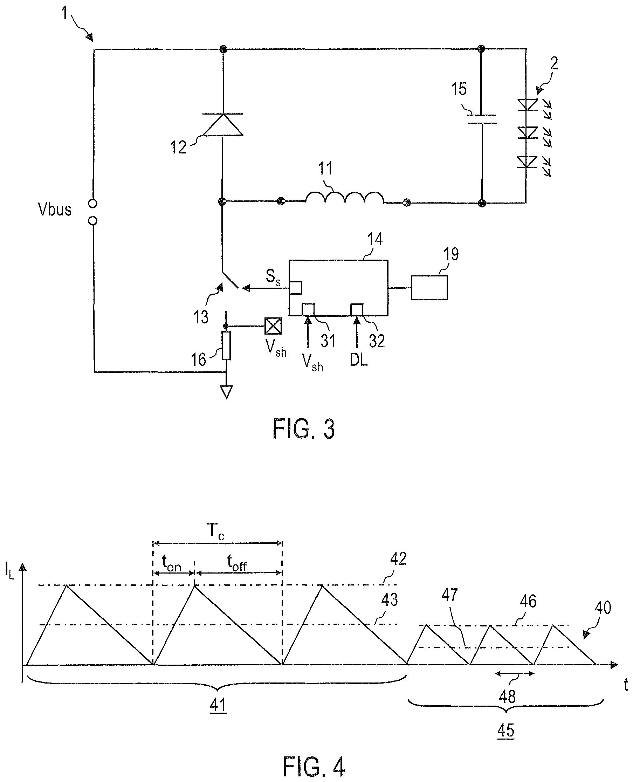

Die Steuereinrichtung 14 kann die Stromregelung in der ersten Betriebsphase und der zweiten Betriebsphase auf unterschiedliche Weisen ausführen, wie unter Bezugnahme auf Figur 3 bis Figur 10 näher beschrieben wird. Die Steuereinrichtung 14 kann eingerichtet sein, um einen Schaltzeitpunkt, zu dem das steuerbare Schaltmittel 13 ausgeschaltet wird, abhängig von einem Vergleich eines Spulenstroms $I_L$ der Spule 11 mit einem Schaltschwellenwert zu bestimmen. Der Schaltschwellenwert kann für die erste Betriebsphase und die zweite Betriebsphase unterschiedlich festgelegt sein. Auf diese Weise kann in der ersten Betriebsphase die Ausgangsspannung der Betriebsschaltung rasch auf einen Wert eingestellt werden, der sich der Vorwärtsspannung $V_F$ der wenigstens einen LED 2 und somit am Arbeitspunkt für den Betrieb der wenigstens einen LED 2 annähert.

Die Steuereinrichtung 14 kann eingerichtet sein, um das steuerbare Schaltmittel 13 so getaktet zu schalten, dass der Wandler der Betriebsschaltung 1 sowohl in der ersten Betriebsphase als auch in der zweiten Betriebsphase im kritischen Betriebsmodus (BCM, "Borderline Conduction Mode") betrieben wird. Die Steuereinrichtung 14 kann eingerichtet sein, um das steuerbare Schaltmittel 13 getaktet so zu schalten, dass der Wandler der Betriebsschaltung sowohl in der ersten Betriebsphase als auch in der zweiten Betriebsphase in einem kontinuierlichen Betrieb (CCM, "Continuous Conduction Mode") oder in einem lückenden Betrieb (DCM, "Discontinuous Conduction Mode") betrieben wird.

Figur 3 zeigt ein System 1 nach einem Ausführungsbeispiel. Bei dem System 1 ist die Steuereinrichtung 14 eingerichtet, um zum Bestimmen eines Zeitpunkts zum Ausschalten des steuerbaren Schaltmittels 13 eine Spannung $V_{sh}$ auszuwerten, die über einen Messwiderstand 16 abfällt. Die Spannung $V_{sh}$ ist in dem Zustand, in dem das steuerbare Schaltmittel 13 im Ein-Zustand ist, proportional zu einem Spulenstrom $I_L$ Spule 11.

Die Steuereinrichtung 14 kann das den Spulenstrom repräsentierende Signal $V_{sh}$ an einem Eingang 31 empfangen. Ein weiterer Eingang 32 der Steuereinrichtung 14 kann eingerichtet sein, um ein den Dimmlevel repräsentierendes Signal DL zu empfangen. Der Dimmlevel DL kann durch eine Benutzereingabe und/oder eine zentrale Helligkeitssteuerung festgelegt sein. Der Dimmlevel DL kann an die Betriebsschaltung 1 übertragen werden, beispielsweise über einen Bus oder ein Drahtloskommunikationssystem.

Die Steuereinrichtung 14 kann eingerichtet sein, um das den Spulenstrom $I_L$ repräsentierende Signal $V_{sh}$ in der ersten Betriebsphase mit einem ersten Schaltschwellenwert zu vergleich, um zu bestimmen, wann das steuerbare Schaltmittel 13 ausgeschaltet wird. Die Steuereinrichtung 14 kann eingerichtet sein, um das steuerbare Schaltmittel 13 in der ersten Betriebsphase jeweils nach einer ersten Zeitdauer wieder einzuschalten.

Die Steuereinrichtung 14 kann eingerichtet sein, um das den Spulenstrom $I_L$ repräsentierende Signal $V_{sh}$ in der zweiten Betriebsphase mit einem zweiten Schaltschwellenwert zu vergleich, um zu bestimmen, wann das steuerbare Schaltmittel 13 ausgeschaltet wird. Der zweite Schaltschwellenwert kann von dem ersten Schaltschwellenwert verschieden sein. Der zweite Schaltschwellenwert kann wenigstens für einen Dimmlevel kleiner als der erste Schaltschwellenwert sein. Die Steuereinrichtung 14 kann eingerichtet sein, um das steuerbare Schaltmittel 13 in der zweiten Betriebsphase jeweils nach einer zweiten Zeitdauer wieder einzuschalten. Die zweite Zeitdauer kann von der ersten Zeitdauer verschieden sein, nach der in der ersten Betriebsphase das steuerbare Schaltmittel jeweils wieder eingeschaltet wird. Die zweite Zeitdauer kann wenigstens für einen Dimmlevel kürzer als die erste Zeitdauer sein.

Durch die Veränderung des Schaltschwellenwerts, mit dem das den Spulenstrom $I_L$ repräsentierende Signal $V_{sh}$ zum Bestimmen eines Schaltzeitpunkts jeweils verglichen wird, und/oder durch die Veränderung der Zeitdauer, nach der das steuerbare Schaltmittel 13 jeweils wieder eingeschaltet wird, zwischen der ersten Betriebsphase und der zweiten Betriebsphase kann in der ersten Betriebsphase ein Ausgangsstrom des Wandlers auf einen höheren Wert geregelt werden. Dadurch kann die Ausgangsspannung der Betriebsschaltung 1 rasch auf die Vorwärtsspannung der wenigstens einen Leuchtdiode 2 erhöht werden. Für die zweite Betriebsphase kann wenigstens ein Parameter der Regelschleife, beispielsweise ein Sollwert eines zeitlich gemittelten Spulenstroms und/oder ein Sollwert eines zeitlich gemittelten Ausgangsstroms des Wandlers und/oder ein Schaltschwellenwert, so verändert werden, dass die Lichtabgabe der wenigstens einen Leuchtdiode 2 gemäß dem eingestellten Dimmlevel beginnt.

Die Steuereinrichtung 14 kann automatisch bestimmen, wann eine Stromregelung verändert wird, um den Übergang von der ersten Betriebsphase, in der die Ausgangsspannung der Betriebsschaltung aufgebaut wird, zu der zweiten Betriebsphase, in der ein LED-Strom gemäß dem eingestellten Dimmlevel an die wenigstens eine Leuchtdiode bereitgestellt wird, auszuführen. Die Steuereinrichtung 14 kann aus einem Speicher 19 Information über die Vorwärtsspannung der wenigstens einen Leuchtdiode 2 auslesen. Der Speicher 19 kann ein nicht-flüchtiger Speicher sein. Der Speicher 19 kann auch in die Steuereinrichtung 14 integriert sein.

Die Vorwärtsspannung hängt von der Verschaltung der Leuchtdioden 2 des Leuchtmittels ab und bestimmt den Arbeitspunkt für den Betrieb des Leuchtmittels. Die Steuereinrichtung 14 kann eingerichtet sein, um den Zeitpunkt, zu dem der Übergang zu der zweiten Betriebsphase erfolgt, abhängig von dem Wert des zeitlich gemittelten Ausgangsstroms $I_o$ des Wandlers in der ersten Betriebsphase, abhängig von der Vorwärtsspannung $V_F$ der wenigstens einen Leuchtdiode und abhängig von der Kapazität C des wenigstens Kondensators 15 zu wählen. Der Übergang zur zweiten Betriebsphase kann automatisch nach einer Zeit

$$t_{start} = C \cdot V_F / I_{o,1} \qquad\qquad (1)$$

erfolgen, wobei $I_{o,1}$ der Wert ist, auf den der zeitliche Mittelwert des Ausgangsstroms $I_o$ des Wandlers in der ersten Betriebsphase geregelt wird.

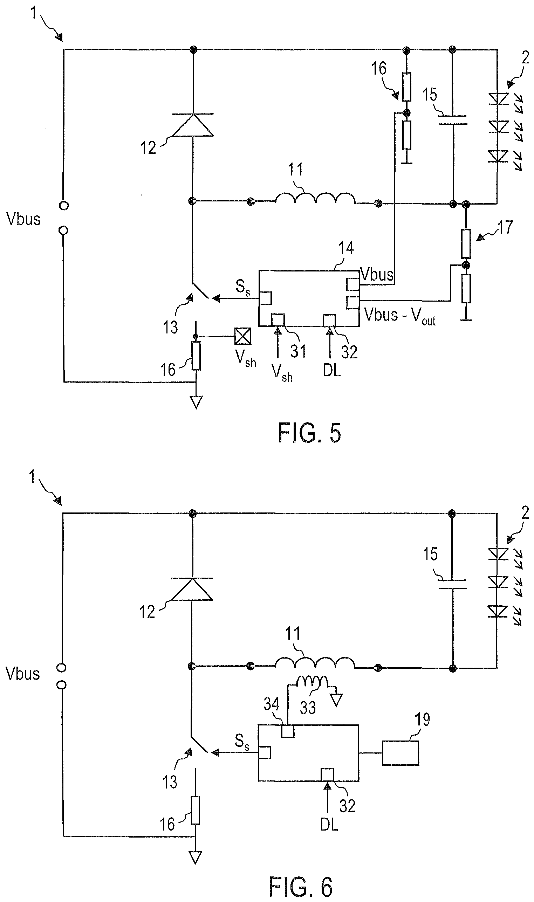

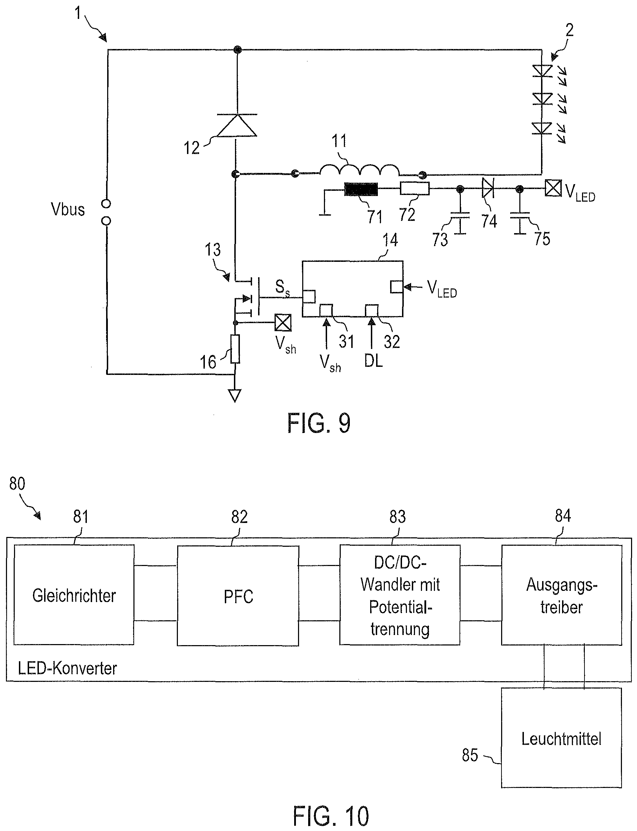

Die Betriebsschaltung kann eingerichtet sein, um die Vorwärtsspannung $V_F$ der wenigstens einen Leuchtdiode 2 automatisch zu detektieren. Dazu können verschiedene bekannte Techniken eingesetzt werden. Beispielsweise kann bei einem ersten Betriebsstart der Ausgangsstrom auf einen niedrigen Wert geregelt und der Anstieg der Ausgangsspannung der Betriebsschaltung überwacht werden. Um die Vorwärtsspannung zu ermitteln, kann bei dem ersten Betriebsstart die Ausgangsspannung über wenigstens einen Spannungsteiler erfasst werden, beispielsweise unter Verwendung einer Anordnung, wie sie unter Bezugname auf Figur 5 beschrieben wird. Alternativ oder zusätzlich kann die Vorwärtsspannung aus einem zeitlich gemittelten Spulenstrom bestimmt werden, beispielsweise unter Verwendung einer Anordnung, wie sie unter Bezugname auf Figur 9 beschrieben wird. Die Vorwärtsspannung kann in dem Speicher 19 gespeichert werden. Der Speicher 19 kann ein nicht-flüchtiger Speicher sein. Die Steuereinrichtung 14 kann die Vorwärtsspannung aus dem Speicher 19 auslesen und kann bei einem Betriebsstart, bei dem die Vorwärtsspannung bereits bekannt ist, abhängig von der Vorwärtsspannung die erste Betriebsphase mit einer anderen Stromregelung ausführen als die nachfolgende zweite Betriebsphase.

Figur 4 zeigt beispielhaft, wie durch unterschiedliche Stromregelung in der ersten Betriebphase die benötigte Ausgangsspannung rasch aufgebaut und in der zweiten Betriebsphase der Ausgangsstrom gemäß dem gewählten Dimmlevel eingestellt werden kann.

Figur 4 zeigt einen Spulenstrom 40, bei dem es sich beispielsweise um den Strom durch die Induktivität 11 des Wandlers handeln kann. In einer ersten Betriebsphase 41 wird der Spulenstrom mit einem ersten Schaltschwellenwert 42 verglichen, um zu bestimmen, wann das steuerbare Schaltmittel 13 ausgeschaltet wird. Nach einer Zeitdauer $t_{off}$ wird das steuerbare Schaltmittel 13 jeweils wieder eingeschaltet. Die Zeitdauer $t_{off}$ kann einen vordefinierten Wert aufweisen oder kann abhängig von der Vorwärtsspannung $V_F$ kennfeldbasiert bestimmt werden. Nach einer Zeitdauer $t_{on}$ erreicht der Spulenstrom wieder den ersten Schaltschwellenwert 42. Der zeitliche Mittelwert des Spulenstroms wird so auf einen ersten Wert 43 geregelt, der größer ist als der zeitliche Mittelwert des Spulenstroms in der anschließenden zweiten Betriebsphase.

In einer zweiten Betriebsphase 45 wird der Spulenstrom mit einem zweiten Schaltschwellenwert 46 verglichen, um zu bestimmen, wann das steuerbare Schaltmittel 13 ausgeschaltet wird. Der zweite Schaltschwellenwert 46 kann für wenigstens einen Dimmlevel kleiner als der erste Schaltschwellenwert 42 sein. Nach einer vorgegebenen zweiten Zeitdauer 48 kann das steuerbare Schaltmittel jeweils wieder eingeschaltet werden. Der zeitliche Mittelwert des Spulenstroms wird so auf einen zweiten Wert 47 geregelt, der für wenigstens einen Dimmlevel kleiner als der zeitliche Mittelwert des Spulenstroms in der vorhergehenden ersten Betriebsphase sein kann.

In der zweiten Betriebsphase 45 kann der zeitliche Mittelwert 47 des Spulenstroms und somit der zeitliche Mittelwert des Ausgangsstroms, der an die wenigstens eine Leuchtdiode 2 bereitgestellt wird, abhängig von dem gewählten Dimmlevel eingestellt werden. Der zweite Schaltschwellenwert 46 und/oder die zweite Zeitdauer 48 können von dem Dimmlevel abhängen. Der zweite Schaltschwellenwert 46 und/oder die zweite Zeitdauer 48 können beispielsweise kennfeldbasiert oder rechnerisch abhängig von dem Dimmlevel DL bestimmt werden.

Figur 5 zeigt ein System mit einer Betriebsschaltung 1 nach einem weiteren Ausführungsbeispiel. Die Steuereinrichtung 14 ist eingerichtet, um über einen ersten Spannungsteiler 16 und einen zweiten Spannungsteiler 17 die Potentialdifferenz zwischen den Ausgängen der Betriebsschaltung 1 zu überwachen.

Um zu bestimmen, wann die Stromregelung für einen Übergang von der ersten Betriebsphase zur zweiten Betriebsphase verändert wird, kann die Steuereinrichtung 14 die erfasste Ausgangsspannung $V_{out}$ der Betriebsschaltung, die die Spannung an dem Kondensator 15 sein kann, mit der Vorwärtsspannung $V_F$ der wenigstens einen Leuchtdiode 2 oder einem von der Vorwärtsspannung $V_F$ abhängenden Spannungsschwellenwert vergleichen. Die Steuereinrichtung 14 kann die Stromregelung verändern, um den Übergang von der ersten Betriebsphase zur zweiten Betriebsphase, in der ein LED-Strom an die wenigstens eine Leuchtdiode 2 bereitgestellt wird, auszuführen. Die Steuereinrichtung 14 kann den Übergang zur zweiten Betriebsphase dann ausführen, wenn die erfasste Ausgangsspannung $V_{out}$ der Betriebsschaltung die Vorwärtsspannung $V_F$ oder den von der Vorwärtsspannung $V_F$ abhängenden Spannungsschwellenwert erreicht.

Bei einem ersten Betriebsstart kann die Steuereinrichtung 14 oder eine andere integrierte Halbleiterschaltung der Betriebsschaltung 1 den zeitlichen Verlauf der Ausgangsspannung über die Spannungsteiler 16, 17 erfassen. Bei dem ersten Betriebsstart kann der Ausgangsstrom des Wandlers auf einen relativ kleinen Wert geregelt werden. Auf diese Weise kann die Vorwärtsspannung $V_F$ der wenigstens einen Leuchtdiode automatisch ermittelt werden.

Die Veränderung der Stromregelung zwischen der ersten Betriebsphase und der zweiten Betriebsphase kann auf unterschiedliche Weise erfolgen. Beispielsweise kann, wie unter Bezugnahme auf Figur 1 bis Figur 4 beschrieben, ein einen Spulenstrom $I_L$ repräsentierendes Signal oder ein anderes Signal, von dem der Ausgangsstrom des Wandlers abhängt, überwacht werden, um wenigstens einen Schaltzeitpunkt zum Schalten des wenigstens einen steuerbaren Schaltmittels 13 zu bestimmen.

Als Eingangssignal für eine Stromregelung kann nicht nur die über einen Messwiderstand 16 abfallende Spannung verwendet werden, sondern auch ein anderes Signal, wie beispielhaft in Figur 6 dargestellt ist.

Figur 6 zeigt ein System mit einer Betriebsschaltung 1 nach einem weiteren Ausführungsbeispiel. Die Betriebsschaltung 1 weist eine Induktivität 33 auf, die induktiv mit der Spule 11 des Wandlers gekoppelt ist. Die Induktivität 33 kann mit einem Eingang 34 der Steuereinrichtung 14 verbunden sein. Die Steuereinrichtung kann die Spannung der Induktivität 33 überwachen, um zu bestimmen, wann das steuerbare Schaltmittel 13 eingeschaltet und/oder ausgeschaltet wird. Zur Anpassung der Stromregelung zwischen der ersten Betriebsphase und der zweiten Betriebsphase kann beispielsweise ein Schaltschwellenwert verändert werden, mit dem die Steuereinrichtung 14 das Potenzial an ihrem Eingang 34 vergleicht.

Die Steuereinrichtung 14 der Betriebsschaltung nach Ausführungsbeispielen kann die erste Betriebsphase abhängig von der Vorwärtsspannung ausführen, die für die Schaltung der LED(s) des Leuchtmittels ermittelt wurde. Beispielsweise können eine Dauer der ersten Betriebsphase und/oder ein Kriterium zum Beenden der ersten Betriebsphase von der Vorwärtsspannung der Schaltung von Leuchtdioden des Leuchtmittels abhängen.

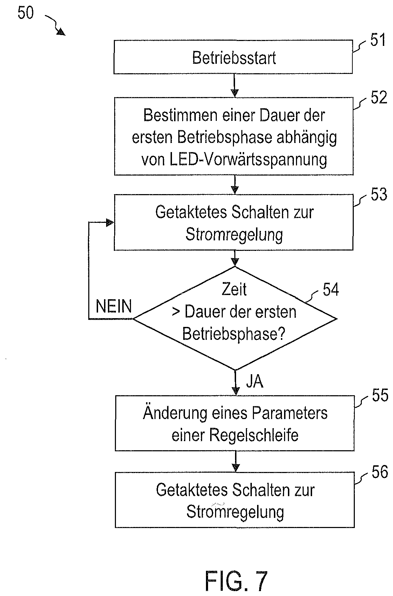

Figur 7 ist ein Flussdiagramm eines Verfahrens 50 nach einem Ausführungsbeispiel. Das Verfahren 50 kann von der Betriebsschaltung nach einem Ausführungsbeispiel automatisch ausgeführt werden. Bei einem ersten Betriebsstart der Betriebsschaltung mit dem damit verbundenen Leuchtmittel kann eine Prozedur zur automatischen Bestimmung der Vorwärtsspannung der wenigstens Leuchtdiode ausgeführt werden. Die Vorwärtsspannung kann nicht-flüchtig gespeichert werden. Die Information über die automatisch ermittelte Vorwärtsspannung kann bei weiteren Betriebsstarts verwendet werden, die den Verfahrensschritten 51-56 folgen können.

Bei Schritt 51 erfolgt ein Betriebsstart der Betriebsschaltung.

Bei Schritt 52 kann die Betriebsschaltung eine Dauer einer ersten Betriebsphase, in der eine Ausgangsspannung der Betriebsschaltung aufgebaut wird, automatisch bestimmen. Die Dauer der ersten Betriebsphase kann rechnerisch abhängig von der Vorwärtsspannung der wenigstens einen Leuchtdiode bestimmt werden. Die Dauer der ersten Betriebsphase kann rechnerisch abhängig von einer Kapazität des Ausgangskondensators 15 bestimmt werden.

Bei Schritt 53 wird in der ersten Betriebsphase zum Aufbauen der Ausgangsspannung ein steuerbares Schaltmittel eines Wandlers getaktet geschaltet. Das getaktete Schalten kann so erfolgen, dass Steuersignale zum Einschalten und/oder Ausschalten des steuerbaren Schaltmittels in einer Regelschleife für einen Strom, beispielsweise einen Ausgangsstrom des Wandlers, erzeugt werden. Die Stromregelung kann in der ersten Betriebsphase so erfolgen, dass der Ausgangsstrom des Wandlers im zeitlichen Mittel auf einen Wert eingestellt wird, der von einem Dimmlevel unabhängig ist. Die erste Betriebsphase kann so ausgeführt werden, dass kein LED-Strom durch die wenigstens eine Leuchtdiode des Leuchtmittels fließt und/oder dass die wenigstens eine Leuchtdiode kein Licht abgibt.

Bei Schritt 54 wird überprüft, ob die seit dem Betriebsstart verstrichene Zeit bereits die bei Schritt 52 rechnerisch ermittelte Dauer der ersten Betriebsphase erreicht oder übersteigt. Falls die seit dem Betriebsstart verstrichene Zeit die bei Schritt 52 rechnerisch ermittelte Dauer der ersten Betriebsphase noch nicht übersteigt, kann die erste Betriebsphase bei Schritt 53 fortgesetzt werden. Andernfalls wird das Verfahren bei Schritt 55 fortgesetzt.

Bei Schritt 55 kann zum Einleiten der zweiten Betriebsphase ein Parameter einer Regelschleife verändert werden. Der Parameter der Regelschleife, der verändert wird, kann auf einen Wert eingestellt werden, der von dem Dimmlevel abhängt. Der Parameter der Regelschleife kann so verändert werden, dass ein zeitlicher Mittelwert des Ausgangsstroms des Wandlers durch die Änderung des Parameters verändert wird. Die Veränderung des Parameters kann so erfolgen, dass zumindest für einen niedrigen Dimmlevel, beispielsweise einen Dimmlevel von 1 %, ein zeitlicher Mittelwert des Ausgangsstroms des Wandlers im Vergleich zu der ersten Betriebsphase verringert wird.

Bei Schritt 56 wird in der zweiten Betriebsphase das steuerbare Schaltmittel des Wandlers getaktet geschaltet, um einen LED-Strom an die wenigstens eine Leuchtdiode bereitzustellen. Das getaktete Schalten kann so erfolgen, dass Steuersignale zum Einschalten und/oder Ausschalten des steuerbaren Schaltmittels der Regelschleife für einen Strom, beispielsweise für den Ausgangsstrom des Wandlers, erzeugt werden. Die Stromregelung ist im Vergleich zur Stromregelung bei Schritt 53 aufgrund der bei Schritt 55 vorgenommenen Änderung eines Regelparameters verändert. Die Stromregelung kann in der zweiten Betriebsphase so erfolgen, dass der Ausgangsstrom des Wandlers im zeitlichen Mittel auf einen Wert eingestellt wird, der einem dem Dimmlevel zugeordneten LED-Strom entspricht.

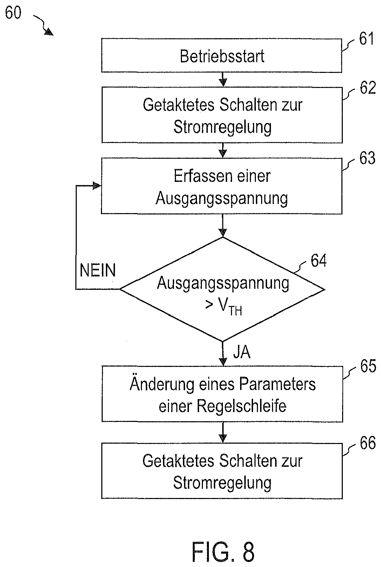

Figur 8 ist ein Flussdiagramm eines Verfahrens 60 nach einem Ausführungsbeispiel. Das Verfahren 60 kann von der Betriebsschaltung nach einem Ausführungsbeispiel automatisch ausgeführt werden. Bei einem ersten Betriebsstart der Betriebsschaltung mit dem damit verbundenen Leuchtmittel kann eine Prozedur zur automatischen Bestimmung der Vorwärtsspannung der wenigstens Leuchtdiode ausgeführt werden. Die Vorwärtsspannung kann nicht-flüchtig gespeichert werden. Die Information über die automatisch ermittelte Vorwärtsspannung kann bei weiteren Betriebsstarts verwendet werden, die den Verfahrensschritten 61-66 folgen können.

Bei Schritt 61 erfolgt ein Betriebsstart der Betriebsschaltung.

Bei Schritt 62 wird in einer ersten Betriebsphase zum Aufbauen der Ausgangsspannung ein steuerbares Schaltmittel eines Wandlers getaktet geschaltet. Das getaktete Schalten kann so erfolgen, dass Steuersignale zum Einschalten und/oder Ausschalten des steuerbaren Schaltmittels in einer Regelschleife für einen Strom, beispielsweise einen Ausgangsstrom des Wandlers, erzeugt werden. Die Stromregelung kann in der ersten Betriebsphase so erfolgen, dass der Ausgangsstrom des Wandlers im zeitlichen Mittel auf einen Wert eingestellt wird, der von einem Dimmlevel unabhängig ist. Die erste Betriebsphase kann so ausgeführt werden, dass kein LED-Strom durch die wenigstens eine Leuchtdiode des Leuchtmittels fließt und/oder dass die wenigstens eine Leuchtdiode kein Licht abgibt.

Bei Schritt 63 kann eine aktuelle Ausgangsspannung der Betriebsschaltung erfasst werden.

Bei Schritt 64 kann überprüft werden, ob die Ausgangsspannung einen Spannungsschwellenwert $V_{TH}$ erreicht hat. Der Spannungsschwellenwert $V_{TH}$ kann gleich der Vorwärtsspannung $V_F$ der wenigstens einen Leuchtdiode des Leuchtmittels sein oder kann von der Vorwärtsspannung $V_F$ der wenigstens einen Leuchtdiode des Leuchtmittels abhängen. Der Spannungsschwellenwert $V_{TH}$ kann gleich der Vorwärtsspannung $V_F$ multipliziert mit einem Faktor, der kleiner als eins ist, sein. Falls die aktuelle Ausgangsspannung den Spannungsschwellenwert $V_{TH}$ noch nicht übersteigt, kann die erste Betriebsphase bei Schritt 63 fortgesetzt werden. Andernfalls wird das Verfahren bei Schritt 65 fortgesetzt.

Bei Schritt 65 kann zum Einleiten der zweiten Betriebsphase ein Parameter einer Regelschleife verändert werden. Bei Schritt 66 kann der Wandler mit der veränderten Stromregelung weiter betrieben werden, um einen LED-Strom an die wenigstens eine Leuchtdiode bereitzustellen. Die Schritte 65 und 66 können wie die Schritte 55 und 56 des Verfahrens von Figur 7 ausgeführt werden.

Eine Überwachung der Ausgangsspannung der Betriebsschaltung 1 zur Bestimmung des Zeitpunkts, zu dem die zweite Betriebphase beginnt, und/oder zur automatischen Ermittlung der Vorwärtsspannung der wenigstens einen Leuchtdiode 2 bei einem ersten Betriebsstart kann mit unterschiedlicher Schaltungskonfigurationen ausgeführt werden. Beispielsweise kann eine Konfiguration verwendet werden, wie sie unter Bezugnahme auf Figur 5 beschrieben wurde. Alternativ oder zusätzlich kann eine Erfassung mit einer Induktivität erfolgen, wie unter Bezugnahme auf Figur 9 beschrieben wird.

Figur 9 zeigt ein System mit einer Betriebsschaltung 1 nach einem Ausführungsbeispiel. Die Steuereinrichtung 14 ist eingerichtet, um sequentiell eine erste Betriebsphase zum Aufbauen der Ausgangsspannung und eine zweite Betriebsphase, in der ein LED-Strom an die wenigstens eine LED bereitgestellt wird, auszuführen. Die erste Betriebsphase und die zweite Betriebsphase können eine unterschiedliche Stromregelung aufweisen, bei der ein zeitlicher Mittelwert eines Ausgangsstroms des Wandlers auf unterschiedliche Werte geregelt werden kann. Die entsprechenden Funktionen können wir unter Bezugnahme auf Figur 1 bis Figur 8 beschrieben ausgeführt werden.

Um die über die LED(s) 2 abfallende Spannung $V_{LED}$ zu bestimmen, kann die Betriebsschaltung eine Induktivität 71 umfassen, die induktiv mit der Spule 11 gekoppelt ist. Über einen Widerstand 72, einen als Tiefpassfilter wirkenden Kondensator 73 und eine Diode 74 kann ein Kondensator 75 geladen werden. Die Spannung am Kondensator 75 kann als Maß für die über die LED(s) 2 abfallende Spannung $V_{LED}$ verwendet werden, mit der beispielsweise bei einem ersten Betriebsstart die Vorwärtsspannung $V_F$ der LED(s) 2 ermittelt werden kann und/oder bestimmt werden kann, wann die zweite Betriebsphase gestartet werden soll.

Betriebsschaltungen nach Ausführungsbeispielen können in unterschiedlichen Vorrichtungen und Systemen eingesetzt werden. Beispielsweise kann die Betriebsschaltung nach einem Ausführungsbeispiel in einem LED-Konverter verwendet werden.

Figur 10 zeigt einen LED-Konverter 80 nach einem Ausführungsbeispiel. Der LED-Konverter 80 kann einen Gleichrichter 81 und eine Leistungsfaktorkorrekturschaltung 82 umfassen. Der LED-Konverter 80 kann optional einen DC/DC-Wandler 83 umfassen. Eine Betriebsschaltung nach einem Ausführungsbeispiel kann als Ausgangstreiber 84 verwendet werden. Ein Leuchtmittel 85 mit wenigstens einer Leuchtdiode ist im Betrieb mit dem LED-Konverter 80 verbunden.

Während Ausführungsbeispiele unter Bezugnahme auf die Figuren beschrieben wurden, können Abwandlungen bei weiteren Ausführungsbeispielen verwendet werden.

Während Ausführungsbeispiele beschrieben wurden, bei denen eine Betriebsschaltung einen Tiefsetzsteller aufweist, können die Betriebsschaltungen auch andere Wandler, beispielsweise Sperrwandler oder Aufwärtswandler, umfassen.

Während Ausführungsbeispiele beschrieben wurden, bei denen die Betriebsschaltung die Vorwärtsspannung der wenigstens einen Leuchtdiode des Leuchtmittels durch Überwachen der über die wenigstens einen Leuchtdiode abfallenden Spannung bestimmen kann, können auch andere Ausgestaltungen verwendet werden, mit denen die Betriebsschaltung Information über die Vorwärtsspannung der wenigstens einen Leuchtdiode des Leuchtmittels erhält. Das Leuchtmittel kann ein Kodierungselement aufweisen, beispielsweise einen Widerstand, der die Vorwärtsspannung kodiert und der von dem Betriebsgerät ausgelesen werden kann. Die Betriebsschaltung kann alternativ oder zusätzlich so eingerichtet sein, dass sie durch eine benutzerdefinierte Einstellung an einem mechanischen Einstellelement und/oder über eine Schnittstelle für eine bestimmte Vorwärtsspannung der wenigstens einen Leuchtdiode des Leuchtmittels konfiguriert wird. Die Betriebsschaltung kann den so eingestellten Wert der Vorwärtsspannung verwenden, um die erste Betriebsphase auszuführen.

Während die Betriebsschaltung eingerichtet sein kann, um einen LED-Strom gemäß einem Dimmlevel zu regeln, können Betriebsschaltungen nach Ausführungsbeispielen auch verwendet werden, wenn das Leuchtmittel nicht dimmbar ist.

Die Betriebsschaltungen nach Ausführungsbeispielen müssen die Abfolge von erster Betriebsphase zum Aufbauen der Ausgangsspannung und zweiter Betriebsphase zum Bereitstellen des LED-Stroms nicht bei jedem Betriebsstart ausführen. Beispielsweise kann die Abfolge von erster Betriebsphase und zweiter Betriebsphase selektiv nur dann ausgeführt werden, wenn der Dimmlevel kleiner als ein Dimmlevelschwellenwert ist und/oder wenn die Vorwärtsspannung der Anordnung von Leuchtdioden des Leuchtmittels größer als ein Vorwärtsspannungsschwellenwert ist.

Ausführungsbeispiele der Erfindung können bei Betriebsgeräten für LEDbasierte Leuchtmittel eingesetzt werden, beispielsweise bei LED-Konvertern oder zum Betreiben von LED-Modulen, ohne auf diese Anwendungen beschränkt zu sein.

**Patentansprüche**

1. Betriebsschaltung für ein Leuchtmittel, das wenigstens eine Leuchtdiode (2) aufweist, umfassend
   einen getakteten Wandler mit einer Spule (11) und einem steuerbaren Schaltmittel (13) und
   eine Steuereinrichtung (14) zum getakteten Schalten des steuerbaren Schaltmittels,
   wobei die Steuereinrichtung (14) eingerichtet ist, um in einer ersten Betriebsphase (41) eine Stromregelung abweichend von einer auf die erste Betriebsphase folgenden zweiten Betriebsphase (45) auszuführen, wobei die Steuereinrichtung (14) eingerichtet ist, um abhängig von einem Spulenstrom (40) einen Schaltzeitpunkt für das steuerbare Schaltmittel (13) zu bestimmen,
   **dadurch gekennzeichnet, dass** die Steuereinrichtung eingerichtet ist, das steuerbare Schaltmittel (13) so zu schalten, dass ein zeitlicher Mittelwert des Spulenstroms (40) in der ersten Betriebsphase (41) größer als in der zweiten Betriebsphase (45) ist.

2. Betriebsschaltung nach Anspruch 1,
   wobei die Steuereinrichtung (14) eingerichtet ist, um in der ersten Betriebsphase (41) einen Parameter einer Regelschleife für die Stromregelung auf einen ersten Wert (42, 43) zu setzen und um in der zweiten Betriebsphase (45) den Parameter auf einen zweiten Wert (46, 47) zu setzen, der von dem ersten Wert verschieden ist.

3. Betriebsschaltung nach Anspruch 1 oder Anspruch 2,
   wobei die Steuereinrichtung (14) eingerichtet ist, um die erste Betriebsphase abhängig von einer Vorwärtsspannung ($V_F$) der wenigstens einen Leuchtdiode (2) auszuführen.

**4.** Betriebsschaltung nach Anspruch 3,
wobei die Steuereinrichtung (14) eingerichtet ist, um die Vorwärtsspannung ($V_F$) der wenigstens einen Leuchtdiode (2) aus einem nicht-flüchtigen Speicher (19) auszulesen.

**5.** Betriebsschaltung nach Anspruch 3 oder Anspruch 4,
wobei die Steuereinrichtung (14) eingerichtet ist, um bei einem ersten Betriebsstart der Betriebsschaltung (1), bei dem das Leuchtmittel mit der Betriebsschaltung (1) verbunden ist, die Vorwärtsspannung ($V_F$) der wenigstens einen Leuchtdiode (2) automatisch zu detektieren und in dem nicht-flüchtigen Speicher (19) zu speichern.

**6.** Betriebsschaltung nach einem der Ansprüche 3 bis 5,
wobei eine Dauer der ersten Betriebsphase (41) von der Vorwärtsspannung ($V_F$) der wenigstens einen Leuchtdiode (2) abhängt.

**7.** Betriebsschaltung nach einem der Ansprüche 3 bis 6, umfassend
einen Ausgangskondensator (15),
wobei die Steuereinrichtung (14) eingerichtet ist, um die zweite Betriebsphase (45) zu beginnen, bevor eine Spannung an dem Ausgangskondensator die Vorwärtsspannung ($V_F$) der wenigstens einen Leuchtdiode (2) erreicht.

**8.** Betriebsschaltung nach einem der vorhergehenden Ansprüche,
wobei die Steuereinrichtung (14) eingerichtet ist, um die Stromregelung in der ersten Betriebsphase (41) unabhängig von einem Dimmlevel auszuführen und um die Stromregelung in der zweiten Betriebsphase (45) abhängig von dem Dimmlevel auszuführen.

**9.** Betriebsschaltung nach einem der vorhergehenden Ansprüche,
wobei der Wandler (11-13) ein Tiefsetzsteller ist.

**10.** LED-Konverter, umfassend
die Betriebsschaltung (1) nach einem der vorhergehenden Ansprüche.

**11.** System, umfassend
ein Leuchtmittel, das wenigstens eine Leuchtdiode (2) umfasst, und
eine Betriebsschaltung (1) nach einem der Ansprüche 1 bis 9, die mit dem Leuchtmittel verbunden ist.

**12.** Verfahren zum Betreiben eines Leuchtmittels, das wenigstens eine Leuchtdiode (2) aufweist, mit einer Betriebsschaltung (1), die einen getakteten Wandler mit einer Spule (11) und einem steuerbaren Schaltmittel (13) umfasst, wobei das Verfahren umfasst:

getaktetes Schalten des steuerbaren Schaltmittels (13) in einer ersten Betriebsphase (41) zum Aufbauen einer Ausgangsspannung der Betriebsschaltung (1) und
getaktetes Schalten des steuerbaren Schaltmittels (13) in einer auf die erste Betriebsphase nachfolgenden zweiten Betriebsphase (45), um die wenigstens eine Leuchtdiode (2) mit einem LED-Strom ($I_{LED}$) zu versorgen,

wobei in der ersten Betriebsphase (41) eine Stromregelung abweichend von der zweiten Betriebsphase (45) ausgeführt wird, wobei abhängig von einem Spulenstrom (40) ein Schaltzeitpunkt für das steuerbare Schaltmittel (13) bestimmt wird,
**dadurch gekennzeichnet, dass**
das steuerbare Schaltmittel (13) so geschaltet wird, dass ein zeitlicher Mittelwert des Spulenstroms (40) in der ersten Betriebsphase (41) größer als in der zweiten Betriebsphase (45) ist.

**Claims**

**1.** An operating circuit for a lighting means, which has at least one light-emitting diode (2), comprising
a clocked converter with a coil (11) and a controllable switching means (13) and
a control device (14) for the clocked switching of the controllable switching means,
wherein the control device (14) is set up in order to carry out in a first operating phase (41) a current control deviating from a second operating phase (45) following the first operating phase,
wherein the control device (14) is set up, in order to determine a switching time for the controllable switching means (13) depending on a coil current (40),

**characterized in that** the control device is set up,

to switch the controllable switching means (13) such that a temporal mean value of the coil current (40) in the first operating phase (41) is greater than in the second operating phase (45).

**2.** An operating circuit according to Claim 1,

wherein the control device (14) is set up, in order to set a parameter of a control loop for the current control in the first operating phase (41) to a first value (42, 43) and in order to set the parameter in the second operating phase (45) to a second value (46, 47), which is different from the first value.

**3.** An operating circuit according to Claim 1 or Claim 2,

wherein the control device (14) is set up, in order to carry out the first operating phase depending on a forward voltage ($V_F$) of the at least one light-emitting diode (2).

**4.** An operating circuit according to Claim 3,

wherein the control device (14) is set up, in order to read the forward voltage ($V_F$) of the at least one light-emitting diode (2) from a non-volatile memory (19).

**5.** An operating circuit according to Claim 3 or Claim 4,

wherein the control device (14) is set up, in order to automatically detect the forward voltage ($V_F$) of the at least one light-emitting diode (2) and to store it in the non-volatile memory (19), during a first operational start of the operating circuit (1) in which the light means is connected with the operating circuit (1).

**6.** An operating circuit according to any one of Claims 3 to 5,

wherein a duration of the first operating phase (41) depends on the forward voltage ($V_F$) of the at least one light-emitting diode (2).

**7.** An operating circuit according to any one of Claims 3 to 6, comprising

an output capacitor (15),

wherein the control device (14) is set up, in order to begin the second operating phase (45), before the voltage at the output capacitor reaches the forward voltage ($V_F$) of the at least one light-emitting diode (2).

**8.** An operating circuit according to any one of the preceding claims,

wherein the control device (14) is set up, in order to carry out the current control in the first operating phase (41) independent of a dimming level and in order to carry out the current control in the second operating phase (45) dependent on the dimming level.

**9.** An operating circuit according to any one of the preceding claims,

wherein the converter (11-13) is a step-down converter.

**10.** An LED converter, comprising

the operating circuit (1) according to any one of the preceding claims.

**11.** A system, comprising

a lighting means, which comprises at least one light-emitting diode (2), and

an operating circuit (1) according to any one of Claims 1 to 9, which is connected with the lighting means.

**12.** A method for operating a lighting means, which has at least one light-emitting diode (2), with an operating circuit (1), which comprises a clocked converter with a coil (11) and a controllable switching means (13),

wherein the method comprises:

clocked switching of the controllable switching means (13) in a first operating phase (41) for establishing an output voltage of the operating circuit (1) and

clocked switching of the controllable switching means (13) in a second operating phase (45) following the first operating phase, in order to provide the at least one light-emitting diode (2) with an LED current ($I_{LED}$),

wherein in the first operating phase (41) a current control is carried out deviating from the second operating phase (45), wherein depending on a coil current (40) a switching time for the controllable switching means (13) is determined

**characterized in that**
the controllable switching means (13) is switched such that a temporal mean value of the coil current (40) in the first operating phase (41) is greater than in the second operating phase (45).

**Revendications**

1. Circuit de fonctionnement pour un moyen d'éclairage qui présente au moins une diode électroluminescente (2), comprenant
   un convertisseur cadencé avec une bobine (11) et un moyen de commutation (13) commandé, et
   un dispositif de commande (14) pour la commutation cadencée du moyen de commutation commandé,
   le dispositif de commande (14) étant agencé pour, dans une première phase de fonctionnement (41), exécuter une régulation de courant d'une façon qui diffère d'une deuxième phase de fonctionnement (45) qui suit la première phase de fonctionnement,
   le dispositif de commande (14) étant agencé pour, en fonction d'un courant de bobine (40), définir un instant de commutation pour le moyen de commutation (13) commandé, **caractérisé en ce que** le dispositif de commande est agencé pour commuter le moyen de commutation (13) commandé de telle sorte qu'une valeur moyenne temporelle du courant de bobine (40) est plus grande dans la première phase de fonctionnement (41) que dans la deuxième phase de fonctionnement (45).

2. Circuit de fonctionnement selon la revendication 1,
   le dispositif de commande (14) étant agencé pour, dans la première phase de fonctionnement (41), régler à une première valeur (42, 43) un paramètre d'une boucle de régulation pour la régulation du courant et pour, dans la deuxième phase de fonctionnement (45), régler le paramètre à une deuxième valeur (46, 47) qui est différente de la première valeur.

3. Circuit de fonctionnement selon la revendication 1 ou la revendication 2,
   le dispositif de commande (14) étant agencé pour exécuter la première phase de fonctionnement en fonction d'une tension directe ($V_F$) de la diode électroluminescente (2) au moins au nombre de un.

4. Circuit de fonctionnement selon la revendication 3,
   le dispositif de commande (14) étant agencé pour sélectionner dans une mémoire non volatile (19) la tension directe ($V_F$) de la diode électroluminescente (2) au moins au nombre de un.

5. Circuit de fonctionnement selon la revendication 3 ou la revendication 4,
   le dispositif de commande (14) étant agencé pour, lors d'un premier démarrage du circuit de fonctionnement (1) dans lequel le moyen d'éclairage est raccordé au circuit de fonctionnement (1), détecter automatiquement la tension directe ($V_F$) de la diode électroluminescente (2) au moins au nombre de un et l'enregistrer dans la mémoire non volatile (19) .

6. Circuit de fonctionnement selon l'une des revendications 3 à 5,
   une durée de la première phase de fonctionnement (41) dépendant de la tension directe ($V_F$) de la diode électroluminescente (2) au moins au nombre de un.

7. Circuit de fonctionnement selon l'une des revendications 3 à 6, comprenant
   un condensateur de sortie (15),
   le dispositif de commande (14) étant agencé pour commencer la deuxième phase de fonctionnement (45) avant qu'une tension sur le condensateur de sortie atteigne la tension directe ($V_F$) de la diode électroluminescente (2) au moins au nombre de un.

8. Circuit de fonctionnement selon l'une des revendications précédentes,
   le dispositif de commande (14) étant agencé pour exécuter la régulation de courant dans la première phase de fonctionnement (41) indépendamment d'un niveau de gradation et pour exécuter la régulation de courant dans la deuxième phase de fonctionnement (45) en fonction du niveau de gradation.

9. Circuit de fonctionnement selon l'une des revendications précédentes,
   le convertisseur (11-13) étant un convertisseur abaisseur.

**10.** Convertisseur pour DEL, comprenant
le circuit de fonctionnement (1) selon l'une des revendications précédentes.

**11.** Système, comprenant
un moyen d'éclairage qui comprend au moins une diode électroluminescente (2),
un circuit de fonctionnement (1) selon l'une des revendications 1 à 9 qui est raccordé au moyen d'éclairage.

**12.** Procédé de fonctionnement d'un moyen d'éclairage qui présente au moins une diode électroluminescente (2), avec un circuit de fonctionnement (1) qui comprend un convertisseur cadencé avec une bobine (11) et un moyen de commutation (13) commandé, le procédé comprenant :

la commutation cadencée du moyen de commutation (13) commandé dans une première phase de fonctionnement (41) pour l'établissement d'une tension de sortie du circuit de fonctionnement (1), et
la commutation cadencée du moyen de commutation (13) commandé dans une deuxième phase de fonctionnement (45) qui suit la première phase de fonctionnement pour alimenter avec un courant de DEL ($I_{LED}$) la diode électroluminescente (2) au moins au nombre de un,
une régulation de courant étant effectuée dans la première phase de fonctionnement (41) d'une façon qui diffère de la deuxième phase de fonctionnement (45),
un instant de commutation pour le moyen de commutation (13) commandé étant défini en fonction d'un courant de bobine (40),

**caractérisé en ce que**
le moyen de commutation (13) commandé est commuté de telle sorte qu'une valeur moyenne temporelle du courant de bobine (40) est plus grande dans la première phase de fonctionnement (41) que dans la deuxième phase de fonctionnement (45).

FIG. 1

Erste Betriebsphase: Aufbauen einer Ausgangsspannung

Zweite Betriebsphase: Versorgen der wenigstens einen Leuchtdiode mit $I_{LED}$

FIG. 2

FIG. 3

FIG. 4

FIG. 5

FIG. 6

50

```
                                          ┌───────────────────────────────┐ ⌐ 51
                                          │         Betriebsstart         │
                                          └───────────────────────────────┘
                                                          │
                                                          ▼
                                          ┌───────────────────────────────┐ ⌐ 52
                                          │    Bestimmen einer Dauer der   │
                                          │  ersten Betriebsphase abhängig │
                                          │    von LED-Vorwärtsspannung    │
                                          └───────────────────────────────┘
                                                          │
                                                          ▼
                                          ┌───────────────────────────────┐ ⌐ 53
                          ┌──────────────▶│    Getaktetes Schalten zur     │
                          │               │        Stromregelung          │
                          │               └───────────────────────────────┘
                          │                               │
                          │                               ▼
                          │                         ╱───────────╲
                          │                        ╱    Zeit      ╲  ⌐ 54
                   NEIN   │               ╱  > Dauer der ersten   ╲
                          └──────────────       Betriebsphase?
                                          ╲                       ╱
                                           ╲─────────────────────╱
                                                     │
                                                     │ JA
                                                     ▼
                                          ┌───────────────────────────────┐ ⌐ 55
                                          │    Änderung eines Parameters   │
                                          │      einer Regelschleife       │
                                          └───────────────────────────────┘
                                                          │
                                                          ▼
                                          ┌───────────────────────────────┐ ⌐ 56
                                          │    Getaktetes Schalten zur     │
                                          │        Stromregelung          │
                                          └───────────────────────────────┘
```

FIG. 7

60

```
                    ┌─────────────────────────┐ ⌐ 61
                    │       Betriebsstart       │
                    └─────────────────────────┘
                                 │
                                 ▼
                    ┌─────────────────────────┐ ⌐ 62
                    │  Getaktetes Schalten zur  │
                    │      Stromregelung        │
                    └─────────────────────────┘
                                 │
                                 ▼
                    ┌─────────────────────────┐ ⌐ 63
          ┌────────►│     Erfassen einer        │
          │         │     Ausgangsspannung      │
          │         └─────────────────────────┘
          │                      │
          │                      ▼
          │                    ╱     ╲        ⌐ 64
     NEIN │                  ╱         ╲
          └────────────────◄ Ausgangsspannung ►
                             ╲   > V_TH   ╱
                               ╲       ╱
                                 ╲   ╱
                                  ▼ JA
                    ┌─────────────────────────┐ ⌐ 65
                    │  Änderung eines Parameters │
                    │     einer Regelschleife    │
                    └─────────────────────────┘
                                 │
                                 ▼
                    ┌─────────────────────────┐ ⌐ 66
                    │  Getaktetes Schalten zur  │
                    │      Stromregelung        │
                    └─────────────────────────┘
```

FIG. 8

19

1

2

12

11

Vbus

71 72

73 74 75 V_LED

13

S_s

14

V_LED

16 V_sh

31 32

V_sh DL

## FIG. 9

80

81 82 83 84

| Gleichrichter | PFC | DC/DC-Wandler mit Potential-trennung | Ausgangs-treiber |

LED-Konverter

85 Leuchtmittel

## FIG. 10

**EP 3 069 572 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060145670 A1